# EUROPÄISCHE PATENTANMELDUNG

(11) **EP 2 159 101 A1**
(43) Veröffentlichungstag der Anmeldung: **03.03.2010**
(21) Anmeldenummer: 09006918.8
(22) Anmeldetag: 24.05.2009
(51) Int. Cl.: B60P 7/13

(54) **Vorrichtung zum Festlegen des Corner Castings (CC) eines Containers**

(30) Priorität: 29.08.2008 DE 202008011526 U
(71) Anmelder: Bermüller, Wolgang, 81927 München (DE)
(72) Erfinder: Bermüller, Wolgang, 81927 München (DE)
(74) Vertreter: Säger, Manfred

(57) **Zusammenfassung**

Eine Vorrichtung (10) zum Festlegen des Corner Castings (CC,11) eines Containers auf der Ladefläche eines Fahrzeugs, insbesondere Kraftfahrzeugs, mit einem von einer ein- in eine ausgefahrene Lage längs seiner Achse (12) in einer Zapfenführung (13) verschiebbaren sowie um diese drehbaren Zapfen (14) mit einem pilzartigen Kopf (15), der nach dem Einschieben von unten in ein Langloch des CC und dem nachfolgenden Drehen die Ränder des Langlochs unter Festlegen des CC und damit des Containers hintergreift, kennzeichnet sich sich dadurch aus, dass der Zapfen (14) mit einem quer zu seiner Achse (12) verlaufenden Durchgangsloch (20) mit einer Rampe (21) auf seiner dem Kopf (15) abgewandten Seite versehen ist und dass ein mit dieser zusammenwirkender, sich an der Unterseite der Ladefläche abstützender, in das Durchgangsloch (20) hineinfahrbarer und dabei den Zapfen verriegelnder Verriegelungskeil (23) vorgesehen ist.

## Beschreibung

Die Erfindung betrifft eine gattungsgemässe Vorrichtung zum Festlegen des Corner Castings (CC) eines Containers auf der Ladefläche eines Fahrzeugs, insbesondere Kraftfahrzeugs, mit einem von einer ein- in eine ausgefahrene Lage längs seiner Achse in einer Zapfenführung verschiebbaren sowie um diese drehbaren Zapfen mit einem pilzartigen Kopf, der nach dem Einschieben von unten in ein Langloch des CC und dem nachfolgenden Drehen die Ränder des Langlochs unter Festlegen des CC und damit des Containers hintergreift, gemäss dem Oberbegriff des Anspruchs 1, auch Twistlocks genannt.

Solche Twistlocks sind in einer Vielzahl von Ausfürungsformen bekannt (z.B. DE 10 2005 062 339A1) auch für die Verriegelung des Containers während dessen Transportes durch das Kraftfahrzeug ausreichend.

Allen diesen bekannten Ausführungsformen haftet der Nachteil an, dass sie aber z.B. ein Kippen des beladenen Containers zum Zweck der Entleerung nicht zulassen. Ausserdem sind sie mit vielen Bauteilen aufwendig und damit störanfällig aufgebaut, die überdies eine kompakte Bauweise und damit einen universellen Einsatz an Fahrzeugen nicht zulässt.

Der Erfindung liegt daher die Aufgabe zugrunde, ein gattungsgemässes Twistlock nach dem Oberbegriff des Hauptanspruchs kleinbauend und mit wenigen Bauteilen so auszubilden, dass damit auch das Kippen des beladenen Containers zwecks dessen Entleerung möglich ist.

Diese Aufgabe wird bei einer gattungsgemässen Vorrichtung nach dem Oberbegriff des Hauptanspruchs erfindungsgemäss dadurch gelöst, dass der Zapfen mit einem quer zu seiner Achse verlaufenden Durchgangsloch mit einer Rampe auf seiner dem Kopf abgewandten Seite versehen ist und dass ein mit dieser zusammenwirkender, sich an der Unterseite der Ladefläche abstützender, in das Durchgangsloch hineinfahrbarer und dabei den Zapfen verriegelnder Verriegelungskeil vorgesehen ist.

Somit kann rechtwinklig zu der Achse des Zapfens in dessen vorzugsweise symmetrisches Durchgangsloch der sich auf der Unterseite des Ladefläche oder Konsole abstützende Verriegelungskeil längs der Rampe unter Bewegung des Zapfens in dessen eingefahrene Lage eingeschoben werden.

Mit Vorteil können durch diese Ausbildung ausserordentlich grosse Kräfte abfangen und in die Ladefläche oder Konsole eingeleitet werden, so dass auch grosse, z.B. 36t Container über 45° sicher gekippt und in dieser Lage entleert werden können. Ausserdem kommt die Erfindung neben dem Zapfen mit einem funktionellen Bauteil in Form des Keils aus, womit es einfach, störunanfällig sowie kompakt aufgebaut werden kann und auch als Bau- oder Nachrüstsatz verwendet werden kann. Schliesslich weisen verschieden grosse Container auch noch verschiedene tiefe Langlöcher des CC auf, was in einfachster Art und Weise durch den Keil selbsttätig kompensiert wird.

Zweckmässigerweise ist das Durchgangsloch bezüglich der Achse des Zapfens symmetrisch angeordnet, wodurch der Zapfen kräftemässig optimal belastet wird.

Zum störungsunanfälligen Betrieb wird mit Vorteil der Verriegelungskeil in einer Nut an der Unterseite der Ladefläche geführt.

Um grosse Verriegelungskräfte zu erzeugen, wird der Verriegelungskeil mittels eines pneumatischen oder hydraulischen Zylinders oder einer Zahnstange oder eines Ölmotors angetrieben in das Durchgangsloch bewegt.

Wenn die Zapfenführung, der Zapfen sowie der Verriegelungskeil in einem lösbaren oder bis unter die Ladefläche abklappbaren Bock als Baueinheit integriert sind, lassen sich auch verschieden lange Container, z.B. mit 20', 30' oder 40' aufsatteln, wenn nur sichergestellt ist, dass an den Orte der CCs am Fahrzeug auch jeweils ein Bock als Baueinheit angebracht ist.

Zweckmässigerweise weist dann der Bock als Baueinheit auch noch den pneumatischen oder hydraulischen Zylinder oder die Zahnstange oder den Ölmotor auf.

Um das schnelle und einfache Entfernen und Lösen des Bocks sicherzustellen kann dieser mit einer hydraulischen Öl-Presskupplung versehen sein, die mit einem entsprechenden fest am Fahrzeug angebrachten Gegenstück zusammenwirkt.

Für die Stabilität des Fahrzeugs weist die Ladefläche eine sie verstärkende Konsole auf und sind in diesem Bereich spiegelbildlich an den beiden Seiten des Fahrzeugs die beiden Böcke vorgesehen, wobei es überdies den Bauaufwand verringert, wenn die an den beiden Seiten des Fahrzeugs vorgesehenen beiden Gegenstücke über ein die Versorgungsleitungen für den pneumatischen oder hydraulischen Zylinder oder den Ölmotor aufweisendes Rohr miteinander verbunden sind.

Weitere zweckmässige Ausgestaltunge und Weiterbildungen der Erfindung sind in den restlichen Unteransprüchen gekennzeichnet.

Ein Ausführungsbeispiel der Erfindung wird nachfolgend unter Bezugnahme auf die Zeichnung näher erläutert. In dieser zeigt:
- Figur 1: die Vorrichtung zum Festlegen des Corner Castings in einer ausgefahrenen Lage, mit Zapfen in schematischer Seitenansicht;
- Figur 1A: den Zapfen, in Draufsicht;
- Figur 1B: den Zapfen, in Seitenansichtsicht;
- Figur 1C: den Zapfen, in Vorderansichtsicht;
- Figur 2: die Vorrichtung nach Fig. 1, aber mit gedrehtem Zapfen;
- Figur 3: die Vorrichtung nach Fig. 1, mit aufgesetz- tem CC und teilweise eingefahrenem Keil;
- Figur 3A: die Vorrichtung nach Fig. 1, als lösbare Baueinheit;
- Figur 4: die Vorrichtung nach Fig. 3, mit ganz ein- gefahrenem Keil und
- Figur 5: die Vorrichtung nach Fig. 4, in Draufsicht:
- Figur 6: die Vorrichtung nach Fig. 4 mit einem Bewe- gungsgerät,aber noch nicht abgesetztem CC auf das Kraftfahrzeug;
- Figur 7A: eine zu der Vorrichtung auf dem Kraftfahr- zeug passende Einrichtung auf einem Waggon, in Seitenansicht,
- Figur 7B: die Einrichtung nach Fig. 7A in Draufsicht
- Figur 8: einen Bewegungsablauf.

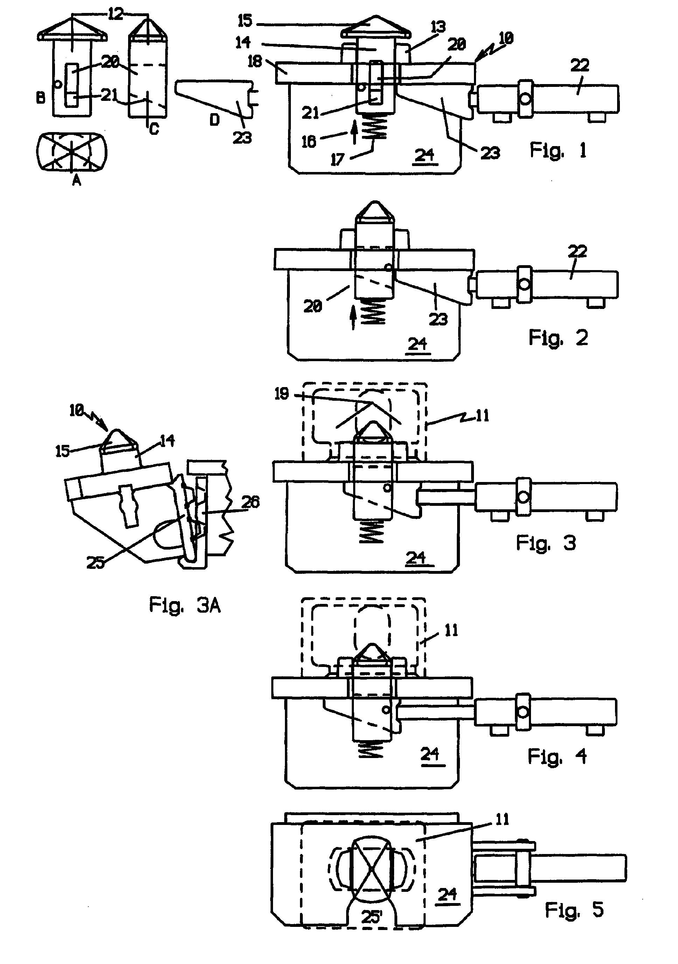

Die insgesamt mit 10 bezeichnete, auch Twist-Lock benannte Vorrichtung dient zum Festlegen des Corner Castings (CC) 11 eines Containers auf der Ladefläche eines Fahrzeugs, insbesondere Kraftfahrzeugs. Aus Gründen der Übersichtlichkeit werden alle gleichen gezeichneten Teile nicht in allen Figuren erneut mit Bezugszeichen versehen. Sie weist einen von einer ein- (Figuren 3 bis 5) in eine ausgefahrene (Figuren 1 und 2) Lage längs seiner Achse 12 in einer Zapfenführung 13 verschiebbaren sowie um diese drehbaren Zapfen 14 mit einem pilzartigen Kopf 15 auf, der von der Kraft 16 einer Feder 17 in die ausgefahrene Lage gedrückt wird (Figur 1).

Danach kann der Container mit seinen CCs 11 auf die Twistlock-konsole 18 abgesetzt sowie anschliessend der Zapfen 14 um seinen Achse 12 gedreht werden, wobei die Ränder des Langlochs 19 von dem pilzartigen Kopf 15 unter Festlegen des CCs 11 und damit des Containers hintergriffen werden. Der Zapfen 14 ist weiter mit einem quer zu seiner Achse 12 verlaufenden im Querschnitt rechteckförmigen sowie bezüglich der Achse 12 des Zapfens 14 symmetrisch angeordneten Durchgangsloch 20 mit einer Rampe 21 auf seiner dem Kopf 15 abgewandten Seite versehen.

Ausserdem ist ein mit der Rampe 21 zusammenwirkender, sich an der Unterseite der Ladefläche bzw. einer diese verstärkende Konsole oder der Bock-Konsole 18 abstützender, in das Durchgangsloch 20 beim wiedergegebenen Ausführungsbeispiel mittels eines Hydraulikzylinders 22 in der gedrehten Lage (Figur 2 und Figur 5) hineinfahrbarer und dabei den Zapfen 14 über die Rampe 21 verriegelnder, dem Durchgangsloch gegenüberliegender Verriegelungskeil 23 (Figur 1D) vorgesehen. Wird in dieser Lage (Figur 2) der Hydraulikzylinder 22 betätigt, fährt der in einer -nicht gezeigten- Nut an der Unterseite der Bock-Konsole 18 geführten Verriegelungskeil 23, wie als Zwischenzustand in Figur 3 gezeigt, in das Durchgangsloch 20 hinein, wobei wegen der Rampe 21 der Zapfen 14 entgegen der Kraft 16 der Feder 17 bewegt wird und dabei in der in Figur 4 gezeigten arretierten Lage das CC 11 mit sehr starker Haltekraft festlegt.

Dabei sind die Zapfenführung 13, der Zapfen 14 sowie der Verriegelungskeil 23 in einem als Baueinheit in einem Bock 24 integriert, wobei dieser auch noch den hydraulischen Zylinder 22 aufweist. Dieser ist, wie in Figur 3A gezeigt, lösbar und/oder bis unter die Ladefläche bzw. Bock-Konsole 18 abklappbar und mit einer hydraulischen Öl-Presskupplung 25 versehen, die mit einem entsprechenden fest am Fahrzeug angebrachten Gegenstück 26 zusammenwirkt.

Figur 5 zeigt die Draufsicht die Twistlock-konsole 18 des Bocks 24 mit einem Ausschnitt 25', so dass ein hier nicht gezeigtes und beschriebenes Hebegerät an dem Boden des CC angreifen kann.

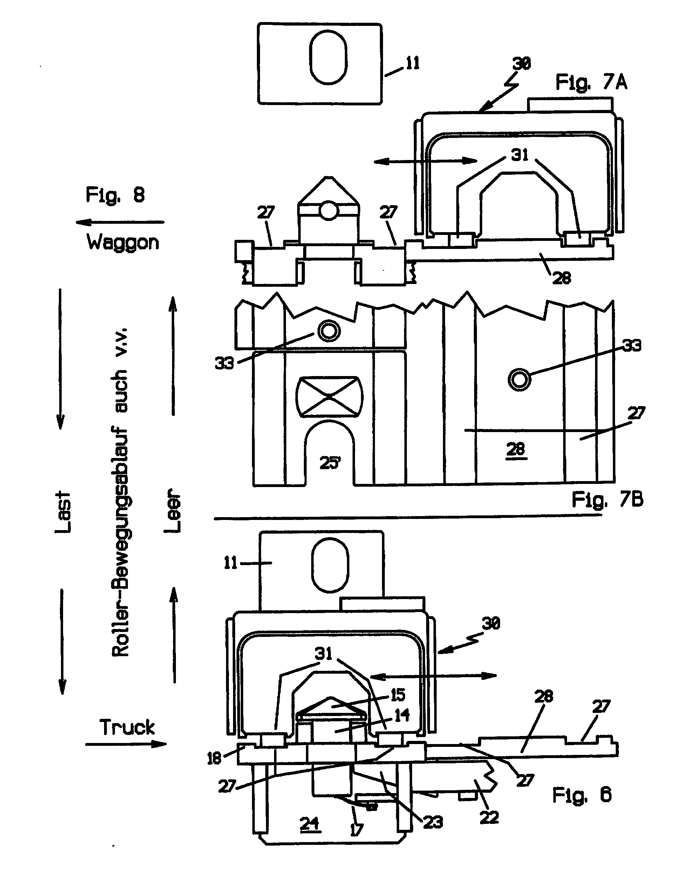

Bei den Figuren 6 und 7A und 7B ist im unteren Teil die erfindungsgemässe Vorrichtung 10 an einem Karftfahrzeug ("Truck") gezeigt. Allerdings ist das CC 11 mit dem Container noch angehoben und ruht auf einem insgesamt mit 30 bezeichneten Bewegungsgerät, das über Rollen 31 in an der Oberseite der Bock-konsole 18 vorgesehehen Laufnuten 27 des als Baueinheit ausgebildeten Bocks 24 bewegbar ist. An diese Bock-konsole 18 schliesst sich eine bis zu der auf der anderen Seite des Fahrzeugs bis zu der dort spiegelsymmetrisch angeordneten (nicht dargestellten) Bock-konsole reichende Lastkonsole an, auf der das Bewegungsgerät 30 den aufgesattelten -nicht gezeigten- Container von dem Waggon zu dem Truck bewegt. Parallel zu dieser Lastkonsole ist eine Ruhewegkonsole 28 angeordnet, um das Bewegungsgerät 30 neben den Container zu plazieren, bevor es bei angehobenem Container quer dazu unter denselben mittels nicht dargestellter Querrollen bewegt werden kann, wonach der Container abgesenkt wird. Nicht nur die Bock-konsole 18, sondern auch die Last- sowie die Ruhewegkonsole 28 weisen hierbei auch Laufnuten 27 zur Führung der Rollen 31 auf. Ausserdem können alle Konsolen mit Erfassungssensoren 33 zum Feststellen der Anwesenheit des Bewegungsgerätes 30 vorgesehen sein, die kabelgebunden oder -los zu der Zentralsteuerung des Trucks übertragen werden können, wobei auch die Erfassungssensoren der Konsolen am Waggon hierzu vorzugsweise über eine Steckverbindung mit dem Kraftfahrzeug verbunden werden.

Der Ablauf der Steuerung erfolgt dabei automatisch. Wenn alle vier CCs 11 angehoben sind, kann das Bewegungsgerät 30 über seine Querrollen unter dem Container plaziert werden. Ist dies bei allen CCs der Fall und über die Erfassungssensoren 33 nachgewiesen, so kann es auf der Lastkonsole und die Bock-konsole 18 den Container zwischen dem Waggon und dem mit dem Kraftfahrzeug bewegt werden. Es wird an seiner Endposition aufgrund der Erfassungssensoren 33 angehalten und z.B: auf dem Kraftfahrzeug abgesetzt. Wird des Absetzen von allen vier Erfassungssensoren 33 festgestellt, so kann die erfindungsgemässe Vorrichtung zum Festlegen des Corner Castings (CC) des Containers auf der Ladefläche des Trucks über einen den Zapfen 14 drehenden Drehzylinder sowie den, den Verriegelungskeil 23 mittels des hydraulischen Zylinders 22 gesteuert automatisiert ablaufen, indem alle vier CCs 11 zugleich verriegelt werden. Der Bewegungsablauf zwischen dem Waggon und dem Kraftfahrzeug ist dabei schematisch in Figur 8 gezeigt.

## Patentansprüche

1. Vorrichtung (10) zum Festlegen des Corner Castings (CC,11) eines Containers auf der Ladefläche eines Fahrzeugs, insbesondere Kraftfahrzeugs, mit einem von einer ein- in eine ausgefahrene Lage längs seiner Achse (12) in einer Zapfenführung (13) verschiebbaren sowie um diese drehbaren Zapfen (14) (14) mit einem pilzartigen Kopf (15), der nach dem Einschieben von unten in ein Langloch des CC und dem nachfolgenden Drehen die Ränder des Langlochs unter Festlegen des CC und damit des Containers hintergreift, **dadurch gekennzeichnet, dass** der Zapfen (14) mit einem quer zu seiner Achse (12) verlaufenden Durchgangsloch (20) mit einer Rampe (21) auf seiner dem Kopf (15) abgewandten Seite versehen ist und dass ein mit dieser zusammenwirkender, sich an der Unterseite der Ladefläche abstützender, in das Durchgangsloch (20) hineinfahrbarer und dabei den Zapfen (14) verriegelnder Verriegelungskeil (23) vorgesehen ist.

2. Vorrichtung nach Anspruch 1, **dadurch gekennzeichnet, dass** das Durchgangsloch (20) im Querschnitt rechteckförmig ausgebildet ist.

3. Vorrichtung nach einem der vohergehenden Ansprüche, **dadurch gekennzeichnet, dass** das Durchgangsloch (20) bezüglich der Achse (12) des Zapfens (14) symmetrisch angeordnet ist.

4. Vorrichtung nach einem der vohergehenden Ansprüche, **dadurch gekennzeichnet, dass** der Verriegelungskeil (23) in einer Nut an der Unterseite der Ladefläche oder diese verstärkende Konsole oder Bock-konsole (18) geführt ist.

5. Vorrichtung nach einem der vohergehenden Ansprüche, **dadurch gekennzeichnet, dass** der Verriegelungskeil (23) in seiner in das Durchgangsloch (20) hineingefahrenen Lage arretierbar ist.

6. Vorrichtung nach einem der vohergehenden Ansprüche, **dadurch gekennzeichnet, dass** der Verriegelungskeil (23) mittels eines pneumatischen oder hydraulischen Zylinders (22) oder einer Zahnstange oder eines Ölmotors angetrieben ist.

7. Vorrichtung nach einem der vohergehenden Ansprüche, **dadurch gekennzeichnet, dass** der Zapfen (14) von der Kraft (16) einer Feder (17) in seine ausgefahrene Lage gedrückt wird.

8. Vorrichtung nach einem der vohergehenden Ansprüche, **dadurch gekennzeichnet, dass** die Zapfenführung (13), der Zapfen (14) sowie der Verriegelungskeil (23) in einem lösbaren oder bis unter die Ladefläche abklappbaren Bock (24) als Baueinheit integriert sind.

9. Vorrichtung nach einem der vohergehenden Ansprüche, **dadurch gekennzeichnet, dass** der Bock (24) als Baueinheit auch noch den pneumatischen oder hydraulischen Zylinder (22) oder die Zahnstange oder den Ölmotor aufweist.

10. Vorrichtung nach einem der vohergehenden Ansprüche, **dadurch gekennzeichnet, dass** der Bock (24) mit einer hydraulischen Öl-Presskupplung (25) versehen ist, die mit einem entsprechenden fest am Fahrzeug angebrachten Gegenstück (26) zusammenwirkt.

11. Vorrichtung nach einem der vohergehenden Ansprüche, **dadurch gekennzeichnet, dass** die Ladefläche eine sie verstärkende Lastkonsole aufweist und in diesem Bereich spiegelbildlich an den beiden Seiten des Fahrzeugs die beiden Böcke (24) vorgesehen sind.

12. Vorrichtung nach einem der vohergehenden Ansprüche, **dadurch gekennzeichnet, dass** die an den beiden Seiten des Fahrzeugs vorgesehenen beiden Gegenstücke über ein die Versorgungsleitungen für den pneumatischen oder hydraulischen Zylinder (22) oder den Ölmotor aufweisendes Rohr miteinander verbunden sind.

13. Vorrichtung nach einem der vohergehenden Ansprüche, **dadurch gekennzeichnet, dass** der Keil (23) einen an die Rampe (21) angepasste und mit dieser zusammenwirkende Unterseite aufweist.

14. Vorrichtung nach einem der vohergehenden Ansprüche, **dadurch gekennzeichnet, dass** die Bock-konsole (18) Laufnuten (27) aufweist.

15. Vorrichtung nach einem der vohergehenden Ansprüche, **dadurch gekennzeichnet, dass** der Bock-konsole (18) und/oder der eine Baueinheit bildende Bock (24) die mit dazu fluchtenden Laufnuten (27) aufweisende Lastkonsole zugeordnet ist.

16. Vorrichtung nach einem der vohergehenden Ansprüche, **dadurch gekennzeichnet, dass** jeder Lastkonsole eine parallel dazu verlaufende Ruhewegkonsole (28) zugeordnet ist.
